# EUROPÄISCHE PATENTSCHRIFT

(11) **EP 3 100 318 B1**
(45) Veröffentlichungstag und Bekanntmachung des Hinweises auf die Patenterteilung: **15.04.2020**
(21) Anmeldenummer: 15701025.7
(22) Anmeldetag: 23.01.2015
(51) Int. Cl.: H01M 10/613, H01M 10/615, H01M 10/625, H01M 10/663, H01M 10/6561, B60H 1/00, H01M 10/48, B60L 1/02, B60L 3/00, B60L 58/26, B60L 58/27

(54) **VORRICHTUNG UND VERFAHREN ZUM TEMPERIEREN EINES ELEKTRISCHEN ENERGIESPEICHERS EINES FAHRZEUGS**
DEVICE AND METHOD FOR CONTROLLING THE TEMPERATURE OF AN ELECTRIC ENERGY STORE OF A VEHICLE
SYSTÈME ET PROCÉDÉ DE THERMORÉGULATION D'UN ACCUMULATEUR D'ÉNERGIE ÉLECTRIQUE D'UN VÉHICULE

(30) Priorität: 27.01.2014 DE 102014201361
(43) Veröffentlichungstag der Anmeldung: 07.12.2016
(73) Patentinhaber: Robert Bosch GmbH, 70442 Stuttgart (DE); Samsung SDI Co., Ltd., Yongin-si, Gyeonggi-do 446-577 (KR)
(72) Erfinder: REITZLE, Alexander, 89231 Neu-Ulm (DE); HORE, Sarmimala, 70174 Stuttgart (DE); HALD, Markus, 73489 Jagstzell (DE)
(74) Vertreter: Bee, Joachim
(86) Internationale Anmeldenummer: PCT/EP2015/051391
(87) Internationale Veröffentlichungsnummer: WO 2015/110597

(56) Entgegenhaltungen:
- CN-A- 103 358 851
- DE-A1-102008 056 787
- DE-A1-102010 030 892
- JP-B2- 3 145 757
- US-B1- 7 975 637

## Beschreibung

Die Erfindung betrifft eine Vorrichtung zum Temperieren eines elektrischen Energiespeichers, insbesondere einer wiederaufladbaren Batterie, eines Fahrzeugs, mit einem ersten Strömungspfad, der in eine Einhausung des elektrischen Energiespeichers mündet und mit einer Lüftungsanlage zur temperierten Lüftung eines Fahrgastraums des Fahrzeugs, die eine Heiz- und/oder Kühleinrichtung und einen zweiten Strömungspfad aufweist, der von der mindestens eine Heiz- und/oder Kühleinrichtung in den Fahrgastraum führt. Die Erfindung betrifft weiterhin ein entsprechendes Fahrzeug sowie ein entsprechendes Verfahren zum Temperieren eines elektrischen Energiespeichers eines Fahrzeugs.

### Stand der Technik

Fahrzeuge mit Elektro- oder Hybridantrieb benötigen zum Betreiben ihrer elektrischen Antriebseinheit elektrische Energiespeicher wie zum Beispiel wiederaufladbare Traktionsbatterien. Derzeit sind diese Traktionsbatterien zumeist als Lithium-lonen-Batterien ausgebildet. Derartige wiederaufladbare Batterien von Elektro- oder Hybridfahrzeugen erzeugen aufgrund der hohen fließenden Ströme während ihres Betriebs Wärme, welche abgeführt werden muss. Die Kühlung erfolgt entweder über ein eingebautes Kühlgerät oder durch eine Kühlung durch den Fahrtwind.

Die Temperatur in Fahrgasträumen von Fahrzeugen ist von den Umgebungsbedingungen abhängig, zum Beispiel der Außentemperatur oder Sonneneinstrahlung. Deshalb sind bei Fahrzeugen in der Regel Lüftungsanlagen zur temperierten Lüftung des Fahrgastraums vorgesehen, die Heiz- und/oder Kühleinrichtungen aufweisen.

Die FR 2 949 096 A3 offenbart ein Elektrofahrzeug mit einer Vorrichtung zum Temperieren einer wiederaufladbaren Traktionsbatterie des Fahrzeugs. Diese Vorrichtung umfasst einen ersten Strömungspfad, der in eine Einhausung des elektrischen Energiespeichers mündet und eine Lüftungsanlage zur temperierten Lüftung eines Fahrgastraums des Fahrzeugs, die eine Heizeinrichtung und einen zweiten Strömungspfad aufweist, der von der mindestens einen Heiz- und/oder Kühleinrichtung in den Fahrgastraum führt. Die Vorrichtung weist einen Zulufteintritt für Luft aus der Fahrzeugumgebung auf, der zum Aufteilen eines Zuluftstroms in einen ersten Teilstrom und einen zweiten Teilstrom eingerichtet ist, wobei der erste Teilstrom dem ersten Strömungspfad und der zweite Teilstrom dem Fahrgastraum zugeführt wird. Der erste Strömungspfad mündet in eine Einhausung der Traktionsbatterie. Die Batterie erwärmt sich bei laufendem Betrieb und bildet so eine Heizeinrichtung der Lüftungsanlage des Fahrgastraums. Der zweite Strömungspfad führt von der als Heizeinrichtung der Lüftungsanlage fungierenden Batterie in den Fahrgastraum des Elektrofahrzeugs. Dabei wird die Batterie gekühlt und der Fahrgastraum geheizt. Bei kalten Temperaturen nimmt die Batterie im Ruhezustand die niedrige Außentemperatur an, was zu einem Leistungsabfall der Batterie führen kann. Mittels dieser Vorrichtung ist das Temperieren des elektrischen Energiespeichers also nur in begrenztem Umfang möglich. Die DE 10 2008 056787 A1 offenbart eine Vorrichtung zum Temperieren eines elektrischen Energiespeichers, mit getrennten Luftströmen.

Die erfindungsgemäße Vorrichtung mit den in Anspruch 1 genannten Merkmalen, das erfindungsgemäße Fahrzeug mit den in Anspruch 7 genannten Merkmalen und das erfindungsgemäße Verfahren mit den in Anspruch 8 genannten Merkmalen bietet den Vorteil, dass sowohl der elektrische Energiespeicher als auch der Fahrgastraum gut temperiert werden können, ohne dass für Fahrgäste schädliche Bestandteile der Abluft des elektrischen Energiespeichers in den Fahrgastraum gelangen können.

Bei der erfindungsgemäßen Vorrichtung ist dazu vorgesehen, dass die beiden Strömungspfade in der Vorrichtung derart verschaltet sind, dass ein Luftstrom im jeweils einen der beiden Strömungspfade strömungstechnisch unabhängig von einem Luftstrom im jeweils anderen der beiden Strömungspfade ist, wobei die Vorrichtung einen in beiden Strömungspfaden verschalteten Wärmetauscher für einen reinen Wärmeaustausch zwischen den Luftströmen in den beiden Strömungspfaden aufweist. Dieser Wärmetauscher lässt ein Vermischen dieser Luftströme jedoch nicht zu. Durch diese rein thermische Anbindung des ersten Strömungspfades an die Lüftungsanlage der Vorrichtung kann deren Heiz- und/oder Kühleinrichtung auch zum Heizen und/oder Kühlen des elektrischen Energiespeichers genutzt werden, ohne dass für Fahrgäste schädliche Komponenten der Abluft des elektrischen Energiespeichers in den Fahrgastraum gelangen können.

Die Vorrichtung zum Temperieren des elektrischen Energiespeichers nutzt die in vielen Fahrzeugen vorhandene Lüftungsanlage zur temperierten Lüftung des Fahrgastraums des Fahrzeugs. Sie ist daher genau genommen eine Vorrichtung zum Temperieren des elektrischen Energiespeichers und zur temperierten Lüftung des Fahrgastraums des Fahrzeugs.

Erfindungsgemäß weist die Vorrichtung weiterhin einen Zulufteintritt für Luft aus der Fahrzeugumgebung auf. Der Zulufteintritt ist zum Aufteilen eines Zuluftstroms in einen ersten Teilstrom und einen zweiten Teilstrom eingerichtet, wobei der erste Teilstrom dem ersten Strömungspfad und der zweite Teilstrom einem Einlass der Lüftungsanlage zugeführt wird. Somit werden die Luftströme schon bei Eintritt in das Fahrzeug vollständig voneinander getrennt.

Generell kann die Lüftungsanlage selbstverständlich jede Art von Heiz- und/oder Kühleinrichtung, wie Beispielsweise eine Kältemaschine, eine Elektroheizung, ein Peltierelement, etc. aufweisen. Mit Vorteil ist vorgesehen, dass die Heiz- und/oder Kühleinrichtung einen Kältekompressor und/oder eine Standheizung aufweist.

Gemäß einer weiteren vorteilhaften Ausgestaltung der Erfindung weist die Vorrichtung zum Temperieren des elektrischen Energiespeichers eine erste Temperaturregeleinrichtung auf, die ihrerseits einen Temperastursensor zur Ermittlung der Temperatur des elektrischen Energiespeichers sowie ein Stellglied zur Durchflussänderung des Luftstroms im ersten Strömungspfad aufweist. Der Sensor ist bevorzugt direkt an dem elektrischen Energiespeicher oder zumindest in der entsprechenden Einhausung angeordnet.

Gemäß noch einer weiteren vorteilhaften Ausgestaltung der Erfindung weist die Lüftungsanlage eine zweite Temperaturregeleinrichtung auf, die ihrerseits einen Temperastursensor zur Ermittlung der Temperatur im Fahrgastraum und ein Stellglied zur Durchflussänderung des Luftstroms im zweiten Strömungspfad aufweist. Der Sensor ist bevorzugt in dem Fahrgastraum angeordnet.

Schließlich ist mit Vorteil vorgesehen, dass die Vorrichtung einen ersten Luftaustrittskanal für einen Luftaustritt aus der Einhausung des Energiespeichers und dass die Lüftungsanlage einen zweiten Luftaustrittskanal für einen Luftaustritt aus dem Fahrgastraum aufweist, durch die die jeweilige Abluft in die Fahrzeugumgebung abführbar ist. Dabei weist die Lüftungsanlage insbesondere einen den zweiten Luftaustrittskanal mit dem Einlass der Lüftungsanlage verbindenden Rückführkanal für einen Umluftbetrieb der Lüftungsanlage auf.

Das erfindungsgemäße Fahrzeug weist einen Fahrgastraum, einen elektrischen Energiespeicher und eine Vorrichtung zum Temperieren des elektrischen Energiespeichers auf, die ihrerseits die folgenden Komponenten umfasst: (i) einen ersten Strömungspfad, der zum elektrischen Energiespeicher führt und (ii) eine Lüftungsanlage zur temperierten Lüftung eines Fahrgastraums des Fahrzeugs, die einen zweiten Strömungspfad aufweist, der zu dem Fahrgastraum führt. Dabei ist vorgesehen, dass die Vorrichtung als eine vorstehend genannte Vorrichtung ausgebildet ist. Das Fahrzeug ist insbesondere ein Elektro- oder Hybridfahrzeug. Der elektrische Energiespeicher dient der elektrischen Energieversorgung eines elektrischen Antriebs dieses Fahrzeugs und ist insbesondere als wiederaufladbare Traktionsbatterie ausgebildet.

Bei dem erfindungsgemäßen Verfahren zum Temperieren eines elektrischen Energiespeichers eines Fahrzeugs mittels einer Lüftungsanlage zur temperierten Lüftung eines Fahrgastraums des Fahrzeugs wird dem elektrischen Energiespeicher über einen ersten Strömungspfad ein temperierter Luftstrom zugeführt, wobei die Lüftungsanlage dem Fahrgastraum über einen zweiten Strömungspfad einen Luftstrom zuführt. Es ist vorgesehen, dass beide Strömungspfade durch einen Wärmetauscher führen, wobei der dem Energiespeicher zugeführte Luftstrom im Wärmetauscher durch Wärmeübertragung zwischen den Luftströmen temperiert wird.

Durch den rein thermischen Anschluss des ersten Strömungspfades an die Lüftungsanlage zur temperierten Lüftung eines Fahrgastraums entfallen zusätzlichen Kühleinrichtungen für den elektrischen Energiespeicher.

Bei niedrigen Temperaturen wird der elektrische Energiespeicher beheizt, somit entstehen keine Kapazitätseinbrüche. Bei hohen Temperaturen wird dieser gekühlt, eine Überhitzung des elektrischen Energiespeichers wird dadurch vermieden.

Erfindungsgemäß ist vorgesehen, dass ein Zuluftstrom von Luft aus der Fahrzeugumgebung in einem Zulufteintritt in einen ersten Teilstrom und einen zweiten Teilstrom aufgeteilt wird, wobei der erste Teilstrom dem ersten Strömungspfad und der zweite Teilstrom der Lüftungsanlage zugeführt wird.

Die Erfindung wird im Folgenden anhand von Abbildungen näher erläutert. Es zeigen
- Figur 1: eine schematische Darstellung eines Fahrzeugs mit einem Fahrgastraum, einem elektrischen Energiespeicher und einer Vorrichtung zum Temperieren des elektrischen Energiespeichers gemäß einer bevorzugten Ausführungsform der Erfindung und
- Figur 2: den Aufbau einer Einhausung des elektrischen Energiespeichers.

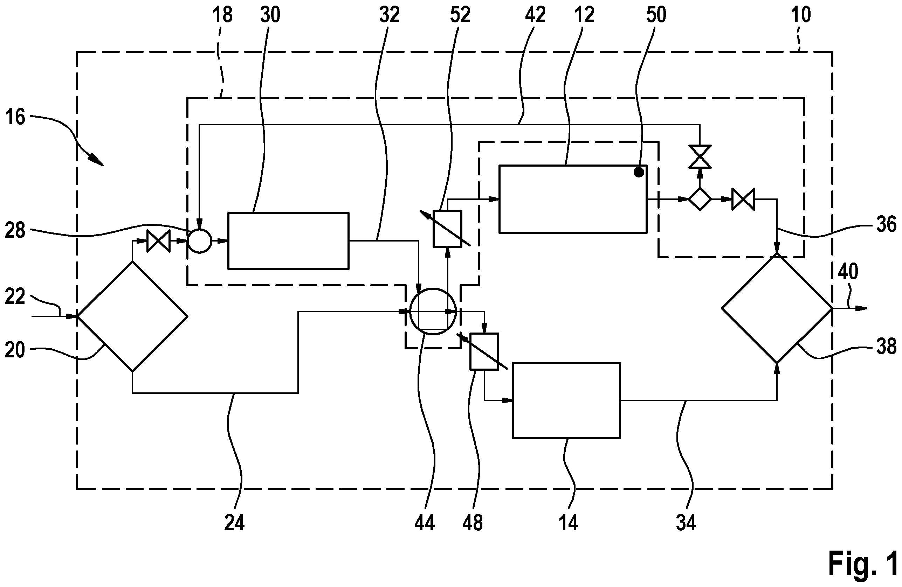

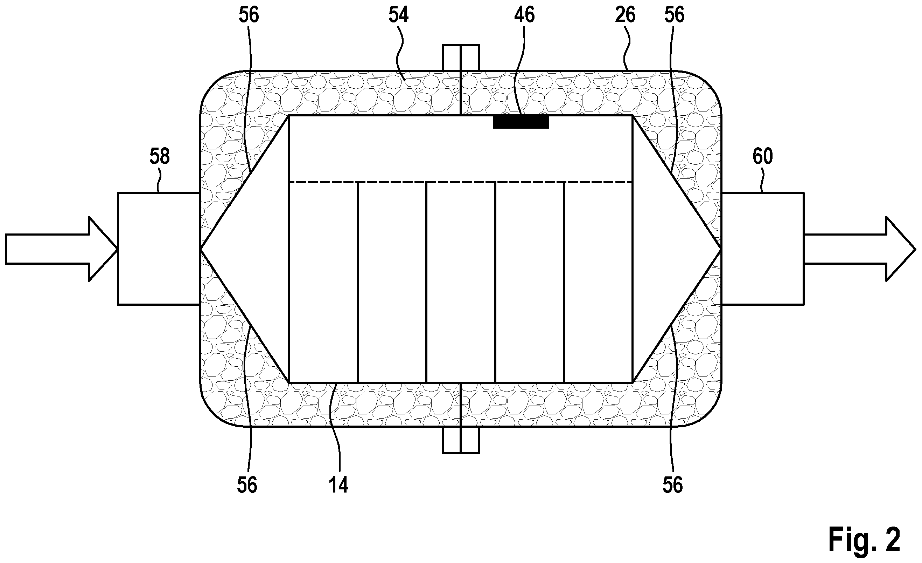

Die Figur 1 zeigt in einer schematischen Darstellung ein Fahrzeug 10 mit einem Fahrgastraum 12 und einem als Batterie ausgebildeten elektrischen Energiespeicher 14. Das Fahrzeug 10 ist ein Elektro- oder Hybridfahrzeug, dessen (nicht dargestellte) elektrische Antriebsmaschine mittels des elektrischen Energiespeichers 14 mit elektrischer Energie versorgt wird. Das Fahrzeug 10 weist eine Vorrichtung 16 zum Temperieren des elektrischen Energiespeichers 14 und zur temperierten Lüftung des Fahrgastraums 12 auf, die eine übliche Lüftungsanlage 18 zur temperierten Lüftung des Fahrgastraums 12 und optional auch anderer Innenräume des Fahrzeugs 10 aufweist. Die Vorrichtung 16 weist einen Zulufteintritt 20 für Luft aus der Fahrzeugumgebung auf, der einen Zuluftstrom (Pfeil 22) in einen ersten Teilstrom und einen zweiten Teilstrom aufteilt. Der erste Teilstrom wird einem ersten Strömungspfad 24 zugeführt, der in eine in Fig. 2 gezeigte Einhausung 26 des elektrischen Energiespeichers 24 mündet. Der zweite Teilstrom wird einem Einlass 28 der Lüftungsanlage 18 zugeführt. Die Lüftungsanlage 18 zur temperierten Lüftung des Fahrgastraums 12 weist eine Heiz- und/oder Kühleinrichtung 30 und einen zweiten Strömungspfad 32 auf, der von der Heiz- und/oder Kühleinrichtung 30 in den Fahrgastraum 12 führt. Die Heiz- und/oder Kühleinrichtung 30 umfasst beispielsweise einen (nicht gezeigten) Kältekompressor und eine (ebenfalls nicht gezeigte) Standheizung.

Der erste Strömungspfad 24 und der zweite Strömungspfad 32 sind innerhalb der Vorrichtung 16 derart verschaltet, dass ein Luftstrom im jeweils einen der beiden Strömungspfade 24, 32 strömungstechnisch unabhängig von einem Luftstrom im jeweils anderen der beiden Strömungspfade 32, 24 ist.

Die Vorrichtung 16 weist weiterhin einen ersten Luftaustrittskanal 34 für einen Luftaustritt aus der Einhausung 26 des Energiespeichers 14 auf und die Lüftungsanlage 18 weist einen zweiten Luftaustrittskanal 36 für einen Luftaustritt aus dem Fahrgastraum 12 auf, durch die die jeweilige Abluft über einen gemeinsamen Luftaustritt 38 in die Fahrzeugumgebung abführbar ist (Pfeil 40). Die Lüftungsanlage 18 umfasst weiterhin einen den zweiten Luftaustrittskanal 36 mit dem Einlass 28 der Lüftungsanlage 18 verbindenden Rückführkanal 42 für einen Umluftbetrieb der Lüftungsanlage 18.

Die Vorrichtung 16 zum Temperieren des elektrischen Energiespeichers 14 und zur temperierten Lüftung des Fahrgastraums 12 weist weiterhin einen in beiden Strömungspfade 24, 32 verschalteten Wärmetauscher 44 für einen reinen Wärmeaustausch zwischen den Luftströmen in den beiden Strömungspfaden 24, 32 auf. Weiterhin weist die Vorrichtung 16 zum Temperieren des elektrischen Energiespeichers 14 eine erste Temperaturregeleinrichtung auf, die einen (in Figur 2 gezeigten) Temperastursensor 46 zur Ermittlung der Temperatur des Energiespeichers 14 sowie ein Stellglied 48 zur Durchflussänderung des Luftstroms im ersten Strömungspfad 24 auf.

Die Lüftungsanlage 18 weist schließlich eine zweite Temperaturregeleinrichtung auf, die ihrerseits einen Temperastursensor 50 zur Ermittlung der Temperatur im Fahrgastraum 12 sowie ein Stellglied 52 zur Durchflussänderung des Luftstroms im zweiten Strömungspfad 32 aufweist.

Die Fig. 2 zeigt den als Batterie ausgebildeten elektrischen Energiespeicher 14 in seiner Einhausung 26. Der gesamte elektrische Energiespeicher 14 ist in ein der Einhausung 26, beispielsweise einem Gehäuse, montiert welches mit einem Füllmaterial 54 gefüllt ist. Ein üblicher Crash-Frame kann in dieses Gehäuse integriert sein. Das Füllmaterial 54 hat eine gewisse mechanische Festigkeit und besitzt sowohl mechanische Dämpfungs- und thermische Dämmungseigenschaften. Durch die Struktur, z.B. Gitter- oder Wabenstruktur, kann in ihr die Luft, mit Hilfe von Leitblechen 56 um den elektrischen Energiespeicher 14 strömen und diese temperieren. Erschütterungen und Vibrationen werden durch das Füllmaterial 54 gedämpft. Ferner kann durch dessen thermische Isolationswirkung bei einem kurzzeitigen Fahrzeughalt die Temperatur des Energiespeichers 14 gehalten werden. Die erforderlichen elektrischen Anschlüsse des elektrischen Energiespeichers 14 werden durch das Gehäuse und das Füllmaterial 54 zu diesem geführt Die Einhausung 26 weist einen Einlass 58 zum Anschluss an den ersten Strömungspfad 24 und einen Auslass 60 zum Anschluss an den ersten Luftaustrittskanal 34 auf.

Es ergibt sich folgende Situation:
Im Fahrgastraum 12 des Fahrzeuges 10 werden Temperaturen um die 293K (20°C) von den Fahrgästen als angenehm empfunden. Dazu muss bei hohen Temperaturen die Luft im Fahrgastraum 12 gekühlt werden und bei niedrigen Temperaturen erwärmt werden. Bei Lithium-Ionen-Batterien oder ähnlichen elektrischen Energiespeichern wird eine ähnliche Betriebstemperatur angestrebt. Im Folgenden soll die Situation für wiederaufladbare Batterien beschrieben werden. Diese Situation lässt sich aber auf andere elektrische Energiespeicher ohne Einschränkungen übertragen.

In der Fig. 1 ist der Prozess schematisch dargestellt. Die Umgebungsluft gelangt als Zuluft in das Fahrzeug 10. Der Luftstrom wird in zwei Teilströme aufgeteilt. Dadurch wird gewährleistet, dass in den Fahrgastraum 12 keine schädlichen Stoffe, welche eventuell in der Batterie entstehen, gelangen können. Ein Teil der Zuluft gelangt in die Lüftungsanlage 18. Diese beinhaltet für eine optimale Temperierung des Fahrgastraums unter anderem einen Kältekompressor (Klimaanlage) und eine Standheizung, beide sind aber nicht zwingend erforderlich. Der Luftstrom wird entsprechend der gewünschten Temperatur im Fahrgastraum 12 temperiert:
Umgebungstemperatur (T_{U}) < Temperatur im Fahrgastraum (T_{F}) : Die Zuluft wird erwärmt.

T_{U} ≥ T_{F}: Die Zuluft wird gekühlt, wenn eine Klimaanlage vorhanden ist, ansonsten strömt die Luft untemperiert weiter.

Dies stellt eine einfache Temperaturregelung für den Fahrgastraum 12 dar. Um den Komfort für die Fahrgäste zu erhöhen sind auch komplexere Regelungen möglich.

Mit Hilfe der Standheizung ist es möglich bei niedrigen Umgebungstemperaturen T_{U} die Temperatur im Fahrgastraum T_{F} und der Batterie bereits vor dem Fahrzeugstart an die gewünschte Temperatur anzugleichen. Anschließend durchströmt die temperierte Zuluft den Wärmetauscher 44, in welchen der Luftstrom, welcher über den ersten Strömungspfad 24 zu der Batterie führt, temperiert wird. Bei dem Wärmetauscher 44 muss bei beiden Luftströmen darauf geachtet werden, dass sich eventuell entstehendes Kondensat absetzen kann und dass dieses abgeführt wird.

Anschließend gelangt der Luftstrom im zweiten Strömungspfad 32 über das Stellglied 52, welches den Volumenstrom dieses Luftstroms reguliert, in den Fahrgastraum 12, um dann als Abluft das Fahrzeug 10 wieder zu verlassen.

Bei dem Luftstrom, welcher über den ersten Strömungspfad 24 zu der Batterie geführt wird, reguliert das hinter dem Wärmetauscher 44 angeordnete Stellglied 48 den Volumenstrom des Luftstroms. Nach dem Temperieren der Batterie verlässt dieser das Fahrzeug 10 als Abluft.

Wird der Fahrgastraum 12 über die Umluft temperiert (Umluft-Betrieb der Lüftungsanlage 18), gelangt die Luft aus dem Fahrgastraum 12 zurück in den vorderen Teil der Lüftungsanlage 18, der die Heiz- und/oder Kühleinrichtung 30 aufweist. Bei dem Umluft-Betrieb der Lüftungsanlage 18 ist die Zufuhr von frischer Zuluft aus der Fahrzeugumgebung unterbrochen.

Die Regelung der Batterietemperatur erfolgt über den Temperatursensor 46 in der Einhausung 26 der Batterie und dem vor dem Temperatursensor 46 angebrachten Stellglied 48. Dabei ist folgende einfache Regelung möglich, welche durch die Berücksichtigung weiterer Störgrößen, z.B. momentan benötigte Leistung, verfeinert werden kann:
Solltemperatur der Batterie (T_{S}) < Isttemperatur der Batterie (T_{B}):
- Temperatur Zuluft (T_{Z}) < Isttemperatur der Batterie (T_{B}): Batterie wird gekühlt.
- T_{Z} > T_{B}: Luftstrom unterbrochen.
T_{S} > T_{B}:
- T_{Z} > T_{B}: Batterie wird erwärmt.
- T_{Z} < T_{B}:: Luftstrom unterbrochen.

## Patentansprüche

1. Vorrichtung (16) zum Temperieren eines elektrischen Energiespeichers (14), insbesondere einer wiederaufladbaren Batterie, eines Fahrzeugs (10), mit einem ersten Strömungspfad (24), der in eine Einhausung (26) des elektrischen Energiespeichers (14) mündet und mit einer Lüftungsanlage (18) zur temperierten Lüftung eines Fahrgastraums (12) des Fahrzeugs (10), die eine Heiz- und/oder Kühleinrichtung (30) und einen zweiten Strömungspfad (32) aufweist, der von der mindestens einen Heiz- und/oder Kühleinrichtung (30) in den Fahrgastraum (12) führt,
wobei die beiden Strömungspfade (24, 32) in der Vorrichtung (16) derart verschaltet sind, dass ein Luftstrom im jeweils einen der beiden Strömungspfade (24, 32) strömungstechnisch unabhängig von einem Luftstrom im jeweils anderen der beiden Strömungspfade (32, 24) ist, wobei die Vorrichtung (16) einen in beiden Strömungspfaden (24, 32) verschalteten Wärmetauscher (44) für einen reinen Wärmeaustausch zwischen den Luftströmen in den beiden Strömungspfaden (24, 32) aufweist, **dadurch gekennzeichnet, dass** der Wärmetauscher (44) in Strömungsrichtung vor dem elektrischen Energiespeicher (14) angeordnet ist
wobei die Vorrichtung (16) einen Zulufteintritt (20) für Luft aus der Fahrzeugumgebung aufweist, der zum Aufteilen eines Zuluftstroms in einen ersten Teilstrom und einen zweiten Teilstrom eingerichtet ist, wobei der erste Teilstrom dem ersten Strömungspfad (24) und der zweite Teilstrom einem Einlass (28) der Lüftungsanlage (18) zugeführt wird.

2. Vorrichtung nach Anspruch 1, **dadurch gekennzeichnet, dass** die Heiz- und/oder Kühleinrichtung (30) einen Kältekompressor und/oder eine Standheizung aufweist.

3. Vorrichtung nach einem der vorhergehenden Ansprüche, **dadurch gekennzeichnet, dass** die Vorrichtung (16) zum Temperieren des elektrischen Energiespeichers (14) eine erste Temperaturregeleinrichtung aufweist, die einen Temperatursensor (46) zur Ermittlung der Temperatur des Energiespeichers (14) und ein Stellglied (48) zur Durchflussänderung des Luftstroms im ersten Strömungspfad (24) aufweist.

4. Vorrichtung nach einem der vorhergehenden Ansprüche, **dadurch gekennzeichnet, dass** die Lüftungsanlage (18) eine zweite Temperaturregeleinrichtung aufweist, die einen Temperastursensor (50) zur Ermittlung der Temperatur im Fahrgastraum (12) sowie ein Stellglied (52) zur Durchflussänderung des Luftstroms im zweiten Strömungspfad (32) aufweist.

5. Vorrichtung nach einem der vorhergehenden Ansprüche, **dadurch gekennzeichnet, dass** die Vorrichtung (16) einen ersten Luftaustrittskanal (34) für einen Luftaustritt aus der Einhausung (26) des Energiespeichers (14) und dass die Lüftungsanlage (18) einen zweiten Luftaustrittskanal (36) für einen Luftaustritt aus dem Fahrgastraum (12) aufweist, durch die die jeweilige Abluft in die Fahrzeugumgebung abführbar ist.

6. Vorrichtung nach Anspruch 5, **dadurch gekennzeichnet, dass** die Lüftungsanlage (18) einen den zweiten Luftaustrittskanal (36) mit dem Einlass (28) der Lüftungsanlage (18) verbindenden Rückführkanal (42) für einen Umluftbetrieb der Lüftungsanlage (18) aufweist.

7. Fahrzeug (10), insbesondere Elektro- oder Hybridfahrzeug, mit einem Fahrgastraum (12), einem elektrischen Energiespeicher (14) und einer Vorrichtung (16) zum Temperieren des elektrischen Energiespeichers (14), die die folgenden Komponenten umfasst:
- einen ersten Strömungspfad (24), der zum elektrischen Energiespeicher (14) führt und
- eine Lüftungsanlage (18) zur temperierten Lüftung des Fahrgastraums (12), die einen zweiten Strömungspfad (32) aufweist, der zu dem Fahrgastraum (12) führt.
**dadurch gekennzeichnet, dass** die Vorrichtung (16) als eine Vorrichtung nach einem der vorhergehenden Ansprüche ausgebildet ist.

8. Verfahren zum Temperieren eines elektrischen Energiespeichers (14), insbesondere einer wiederaufladbaren Batterie, eines Fahrzeugs (10) mittels einer Lüftungsanlage (18) zur temperierten Lüftung eines Fahrgastraums (12) des Fahrzeugs (10), wobei dem elektrischen Energiespeicher (14) über einen ersten Strömungspfad (24) ein temperierter Luftstrom zugeführt wird und wobei die Lüftungsanlage (18) dem Fahrgastraum (12) über einen zweiten Strömungspfad (32) einen Luftstrom zuführt, **dadurch gekennzeichnet, dass** beide Strömungspfade (24, 32) durch einen Wärmetauscher (44) führen, wobei der dem Energiespeicher (14) zugeführte Luftstrom im Wärmetauscher (44) durch Wärmeübertragung zwischen den Luftströmen temperiert wird und wobei der Wärmetauscher (44) in Strömungsrichtung vor dem elektrischen Energiespeicher (14) angeordnet wird, wobei die beiden Strömungspfade (24, 32) in der Vorrichtung (16) derart verschaltet werden, dass ein Luftstrom im jeweils einen der beiden Strömungspfade (24, 32) strömungstechnisch unabhängig von einem Luftstrom im jeweils anderen der beiden Strömungspfade (32, 24) ist.

9. Verfahren nach Anspruch 8, **dadurch gekennzeichnet, dass** ein Zuluftstrom von Luft aus der Fahrzeugumgebung in einem Zulufteintritt in einen ersten Teilstrom und einen zweiten Teilstrom aufgeteilt wird, wobei der erste Teilstrom dem ersten Strömungspfad (24) und der zweite Teilstrom der Lüftungsanlage (18) zugeführt wird.

## Claims

1. Device (16) for controlling the temperature of an electric energy store (14), in particular of a rechargeable battery, of a vehicle (10), having a first flow path (24) which opens into a housing (26) of the electric energy store (14), and having a ventilation system (18) for temperature-controlled ventilation of a passenger compartment (12) of the vehicle (10), which ventilation system (18) has a heating and/or cooling device (30) and a second flow path (32) which leads from the at least one heating and/or cooling device (30) into the passenger compartment (12), wherein the two flow paths (24, 32) are connected in the device (16) in such a way that an airflow in in each case one of the two flow paths (24, 32) is fluidically independent of an airflow in the respective other of the two flow paths (32, 24), wherein the device (16) has a heat exchanger (44), connected in both flow paths (24, 32), for pure heat exchange between the airflows in the two flow paths (24, 32), **characterized in that** the heat exchanger (44) is arranged upstream of the electric energy store (14) in the flow direction,
wherein the device (16) has a supply air inlet (20) for air from the surroundings of the vehicle, which supply air inlet (20) is configured to divide a supply anflow into a first partial flow and a second partial flow, and the first partial flow is fed to the first flow path (24), and the second partial flow is fed to an inlet (28) of the ventilation system (18).

2. Device according to Claim 1, **characterized in that** the heating and/or cooling device (30) has a cooling compressor and/or a stationary-mode heater.

3. Device according to one of the preceding claims, **characterized in that** the device (16) for controlling the temperature of the electric energy store (14) has a first temperature regulating device which has a temperature sensor (46) for determining the temperature of the energy store (14) and an actuator element (48) for changing the throughflow of the airflow in the first flow path (24).

4. Device according to one of the preceding claims, **characterized in that** the ventilation system (18) has a second temperature regulating device which has a temperature sensor (50) for determining the temperature in the passenger compartment (12) and an actuator element (52) for changing the throughflow of the airflow in the second flow path (32).

5. Device according to one of the preceding claims, **characterized in that** the device (16) has an air discharge duct (34) for discharging air from the housing (26) of the energy store (14), and **in that** the ventilation system (18) has a second air discharge duct (36) for discharging air from the passenger compartment (12), through which air discharge ducts (34, 36) the respective waste air can be discharged into the surroundings of the vehicle.

6. Device according to Claim 5, **characterized in that** the ventilation system (18) has a return flow duct (42), connecting the second air discharge duct (36) to the inlet (28) of the ventilation system (18), for an air circulation mode of the ventilation system (18).

7. Vehicle (10), in particular an electric vehicle or a hybrid vehicle, having a passenger compartment (12), an electric energy store (14) and a device (16) for controlling the temperature of the electric energy store (14), which device comprises the following components:
- a first flow path (24) which leads to the electric energy store (14), and
- a ventilation system (18) for temperature-controlled ventilation of the passenger compartment (12), which ventilation system (18) has a second flow path (32) which leads to the passenger compartment (12),
**characterized in that** the device (16) is embodied as a device according to one of the preceding claims.

8. Method for controlling the temperature of an electric energy store (14), in particular of a rechargeable battery, of a vehicle (10) by means of a ventilation system (18) for temperature-controlled ventilation of a passenger compartment (12) of the vehicle (10), wherein a temperature-controlled airflow is fed to the electric energy store (14) by a first flow path (24), and wherein the ventilation system (18) feeds an airflow to the passenger compartment (12) via a second flow path (32), **characterized in that** both flow paths (24, 32) lead through a heat exchanger (44), wherein the airflow which is fed to the energy store (14) is temperature-controlled in the heat exchanger (44) by a transfer of heat between the airflows and wherein the heat exchanger (44) is arranged upstream of the electric energy store (14) in the flow direction, wherein the two flow paths (24, 32) are connected in the device (16) in such a way that an airflow in in each case one of the two flow paths (24, 32) is fluidically independent of an airflow in the respective other of the two flow paths (32, 24).

9. Method according to Claim 8, **characterized in that** a supply airflow of air from the surroundings of the vehicle is divided in a supply air inlet into a first partial flow and a second partial flow, wherein the first partial flow is fed to the first flow path (24) and the second partial flow to the ventilation system (18).

## Revendications

1. Arrangement (16) d'équilibrage de température d'un accumulateur d'énergie électrique (14), notamment d'une batterie rechargeable, d'un véhicule (10), comprenant un premier trajet d'écoulement (24), qui débouche dans un logement (26) de l'accumulateur d'énergie électrique (14), et comprenant un équipement de ventilation (18) destiné à la ventilation d'équilibrage de température d'un habitacle (12) du véhicule (10), lequel possède un dispositif de chauffage et/ou de refroidissement (30) et un deuxième trajet d'écoulement (32), lequel mène de l'au moins un dispositif de chauffage et/ou de refroidissement (30) dans l'habitacle (12), les deux trajets d'écoulement (24, 32) étant interconnectés dans l'arrangement (16) de telle sorte qu'un flux d'air dans l'un respectif des deux trajets d'écoulement (24, 32) est fluidiquement indépendant d'un flux d'air dans l'autre respectif des deux trajets d'écoulement (32, 24),
l'arrangement (16) possédant un échangeur de chaleur (44) connecté dans l'un des deux trajets d'écoulement (24, 32) pour un échange de chaleur pur entre les flux d'air dans les deux trajets d'écoulement (24, 32),
**caractérisé en ce que**
l'échangeur de chaleur (44) est disposé avant l'accumulateur d'énergie électrique (14) dans le sens de l'écoulement,
l'arrangement (16) possédant une entrée d'arrivée d'air (20) pour l'air en provenance de l'environnement du véhicule, laquelle est conçue pour diviser un flux d'arrivée d'air en un premier flux partiel et un deuxième flux partiel, le premier flux partiel étant acheminé au premier trajet d'écoulement (24) et le deuxième flux partiel à une entrée (28) de l'équipement de ventilation (18).

2. Arrangement selon la revendication 1, **caractérisé en ce que** le dispositif de chauffage et/ou de refroidissement (30) possède un compresseur frigorifique et/ou un chauffage d'appoint.

3. Arrangement selon l'une des revendications précédentes, **caractérisé en ce que** l'arrangement (16) d'équilibrage de température de l'accumulateur d'énergie électrique (14) possède un premier dispositif de régulation de température, lequel possède une sonde de température (46) destinée à déterminer la température de l'accumulateur d'énergie (14) et un actionneur (48) destiné à modifier le débit du flux d'air dans le premier trajet d'écoulement (24).

4. Arrangement selon l'une des revendications précédentes, **caractérisé en ce que** l'équipement de ventilation (18) possède un deuxième dispositif de régulation de température, lequel possède une sonde de température (50) destinée à déterminer la température dans l'habitacle (12) ainsi qu'un actionneur (52) destiné à modifier le débit du flux d'air dans le deuxième trajet d'écoulement (32).

5. Arrangement selon l'une des revendications précédentes, **caractérisé en ce que** l'arrangement (16) possède un premier canal de sortie d'air (34) pour une sortie d'air depuis le logement (26) de l'accumulateur d'énergie (14) et **en ce que** l'équipement de ventilation (18) possède un deuxième canal de sortie d'air (36) pour une sortie d'air depuis l'habitacle (12), à travers lesquels l'air vicié respectif peut être évacué dans l'environnement du véhicule.

6. Arrangement selon la revendication 5, **caractérisé en ce que** l'équipement de ventilation (18) possède un canal de retour (42) qui relie le deuxième canal de sortie d'air (36) à l'entrée (28) de l'équipement de ventilation (18) pour un mode de fonctionnement de circulation d'air de l'équipement de ventilation (18).

7. Véhicule (10), notamment véhicule électrique ou hybride, comprenant un habitacle (12), un accumulateur d'énergie électrique (14) et un arrangement (16) d'équilibrage de température de l'accumulateur d'énergie électrique (14), lequel comporte les composants suivants :
- un premier trajet d'écoulement (24) qui mène à l'accumulateur d'énergie électrique (14) et
- un équipement de ventilation (18) destiné à la ventilation d'équilibrage de température de l'habitacle (12), lequel possède un deuxième trajet d'écoulement (32) qui mène à l'habitacle (12),
**caractérisé en ce que** l'arrangement (16) est réalisé sous la forme d'un arrangement selon l'une des revendications précédentes.

8. Procédé d'équilibrage de température d'un accumulateur d'énergie électrique (14), notamment d'une batterie rechargeable, d'un véhicule (10) au moyen d'un équipement de ventilation (18) destiné à la ventilation d'équilibrage de température d'un habitacle (12) du véhicule (10), un flux d'air à la température équilibrée étant acheminé à l'accumulateur d'énergie électrique (14) par le biais d'un premier trajet d'écoulement (24) et l'équipement de ventilation (18) acheminant un flux d'air à l'habitacle (12) par le biais d'un deuxième trajet d'écoulement (32), **caractérisé en ce que** les deux trajets d'écoulement (24, 32) passent à travers un échangeur de chaleur (44), la température du flux d'air acheminé à l'accumulateur d'énergie électrique (14) étant équilibrée dans l'échangeur de chaleur (44) par transfert de chaleur entre les flux d'air et l'échangeur de chaleur (44) étant disposé avant l'accumulateur d'énergie électrique (14) dans le sens de l'écoulement, les deux trajets d'écoulement (24, 32) étant interconnectés dans l'arrangement (16) de telle sorte qu'un flux d'air dans l'un respectif des deux trajets d'écoulement (24, 32) est fluidiquement indépendant d'un flux d'air dans l'autre respectif des deux trajets d'écoulement (32, 24).

9. Procédé selon la revendication 8, **caractérisé en ce qu'**un flux d'arrivée d'air de l'air en provenance de l'environnement du véhicule est divisé en un premier flux partiel et un deuxième flux partiel, le premier flux partiel étant acheminé au premier trajet d'écoulement (24) et le deuxième flux partiel à l'équipement de ventilation (18).
